# EUROPÄISCHE PATENTANMELDUNG

(11) **EP 4 343 879 A2**
(43) Veröffentlichungstag der Anmeldung: **27.03.2024**
(21) Anmeldenummer: 23195616.0
(22) Anmeldetag: 06.09.2023
(51) Int. Cl.: H01M 4/04, H01M 4/36, H01M 4/62, H01M 10/0525, H01M 10/0565, H01M 10/0583, H01M 10/0587, H01M 10/054, H01M 10/0562

(54) **VERFAHREN ZUR HERSTELLUNG VON EINEM HALBZEUG EINER FESTKÖRPERBATTERIE, HALBZEUG EINER FESTKÖRPERBATTERIE UND FESTKÖRPERBATTERIE**

(30) Priorität: 20.09.2022 DE 102022209885
(71) Anmelder: Fraunhofer-Gesellschaft zur Förderung der angewandten Forschung e.V., 80686 München (DE)
(72) Erfinder: Auer, Henry, 01277 Dresden (DE); Werwein, Anton, 01277 Dresden (DE); Nikolowski, Kristian, 01277 Dresden (DE)
(74) Vertreter: Pfenning, Meinig & Partner mbB

(57) **Zusammenfassung**

Es werden ein Verfahren zur Herstellung von einem Halbzeug einer Festkörperbatterie, ein Halbzeug einer Festkörperbatterie und eine Festkörperbatterie bereitgestellt. In dem Verfahren zur Herstellung des Halbzeugs wird vor einem Verpressen eines Schichtverbunds aus Kathodenschicht, Feststoffelektrolyt-Separatorschicht und Anodenschicht entweder gar keine elektrisch leitfähige Ableiterschicht auf der Kathodenschicht und Anodenschicht aufgebracht oder nur entweder auf der Kathodenschicht oder auf der Anodenschicht aufgebracht, also nicht sowohl auf der Kathodenschicht als auch der Anodenschicht aufgebracht. Mit dem Verfahren kann auf einfache, schnelle und kostengünstige Art und Weise ein Halbzeug einer Festkörperbatterie hergestellt werden, das sich durch eine hohe spezifische Kapazität auszeichnet.

## Beschreibung

Es werden ein Verfahren zur Herstellung von zumindest einem Halbzeug einer Festkörperbatterie, ein Halbzeug einer Festkörperbatterie und eine (bevorzugt gewickelte) Festkörperbatterie bereitgestellt. In dem Verfahren zur Herstellung des Halbzeugs wird vor einem Verpressen eines Schichtverbunds aus Kathodenschicht, Feststoffelektrolyt-Separatorschicht und Anodenschicht entweder gar keine elektrisch leitfähige Ableiterschicht auf der Kathodenschicht und Anodenschicht aufgebracht oder nur entweder auf der Kathodenschicht oder auf der Anodenschicht aufgebracht, d.h. nicht sowohl auf der Kathodenschicht als auch der Anodenschicht aufgebracht. Mit dem Verfahren kann auf einfache, schnelle und kostengünstige Art und Weise zumindest ein Halbzeug einer Festkörperbatterie (d.h. ein Halbzeug einer Festkörperbatterie oder eine komplette Festkörperbatterie) hergestellt werden, das/die sich durch eine hohe spezifische Kapazität auszeichnet.

Um Festkörperbatterien mit einer für eine Vielzahl von Anwendungen relevanten Kapazität von >1 Ah herzustellen, müssen mehrlagige Zellen (hier: mehrere Zelllagen) realisiert werden. Dabei besteht eine große Herausforderung darin, einen guten ionenleitenden Kontakt in der festen Phase zwischen den Elektroden und dem Festelektrolytseparator herzustellen. Das führt dazu, dass Ableiter-Elektroden-Separator-Stapel für Festkörperbatteriezellen derzeit aufwendig unter Druck gestapelt werden müssen, wobei der Stapel im gesamten laminiert werden muss (z.B. in der Größenordnung bis zu 100 Einzellagen). Die Anforderungen an den Stapelprozess sind jedoch hinsichtlich der Versatztoleranzen sehr hoch und v.a. unter harschen Umgebungsbedingungen (vor allem Druck) nur sehr aufwändig zu realisieren.

Ein weiterer Ansatz zum Assemblieren besteht im Wickeln von Ableiter-Elektroden-Separator-Stapeln. Um beim Wickeln dieser Stapel elektrische Kurzschlüsse zu vermeiden, müssen - anders als bei klassischen Flüssigionenbatterien - die Ableiter (Stromsammlerfolien) von Anode und Kathode durch isolierende Folien gewisser Dicke voneinander getrennt werden, wodurch aufgrund der Masse der isolierenden Folien eine deutliche Verringerung der Energiedichte entsteht.

Im Stand der Technik sind verschiedene Lösungsansätze für den Bau von Festkörperbatterien bekannt. Die bekannten Lösungsansätze adaptieren dabei Fertigungsstrategien von konventionellen Lithium-Ionenbatterien mit flüssigen Elektrolyten (LlB) ohne auf die Spezifika von Festkörperbatterien einzugehen. Dabei werden zunächst die Elektroden der Batterien doppelseitig auf einem Ableiter aufgebracht (monopolar, Ableitergetragen), beispielsweise über Nassfilmbeschichtung, trockene Beschichtung oder freistehende Fertigungstechniken mit direkter Lamination auf einen Ableiter (z.B. Maxwellprozess - US 2019/237748 A1), und anschließend verdichtet. In der Fertigung der Batterien wird somit der elektronenleitende Kontakt zum Ableiter immer als erster Schritt etabliert, wobei ein guter lonenleitender Kontakt zum Festelektrolyt-Separator als nachrangig betrachtet wird.

Für die Herstellung der Festelektrolyt-Separatoren der Batterie werden diese zunächst auf Trägerfolien hergestellt und dann auf die Elektrode laminiert oder direkt auf eine Elektrode gegossen (Lee 2020 - DOI: 10.1038/s41560-020-0575-z). In beiden Fällen wird nur einseitig zu dieser Elektrode hin (i.d.R. die Kathode) ein guter ionenleitender Verbund erzeugt. Die ionenleitende Verbindung zur Gegenelektrode (i.d.R: Anode) wird erst im letzten Prozessschritt hergestellt. Die Gegenelektrode besteht aus einer aktiven Beschichtung und einem elektrisch leitfähigen Ableiter oder bei einer zunächst anodenfreien Batterie nur aus einem Ableiter, auf dem Lithium erst im ersten Ladeschritt abgeschieden wird (Lee 2020 - DOI: 10.1038/s41560-020-0575-z). Erst dieser letzte Laminationsschritt führt zu einer funktionalen Vollzellanordnung (US 2022/045366 A1).

Aus dieser Herangehensweise ("Elektronenleitende Verbindung vor lonenleitender Verbindung") ergeben sich Probleme bzw. Nachteile bei der Herstellung der Batterie. Um eine Batteriezelle mit einer hohen Kapazität von >1 Ah herzustellen, müssen mehrere Zelllagen übereinander gestapelt werden. Dazu werden im Stand der Technik doppelseitig beschichtete Ableiter verwendet,. Da der lonenleitende Kontakt zwischen Ableiter, Anode, Festkörperelektrolyt-Separator, Kathode und weitere Ableiter durch einen Laminationsprozess bei hohem Druck in einen nachgelagerten Schritt etabliert wird, kommen für diese Herangehensweise nur Stapelkonzepte, oder bedingt Faltkonzepte, zur Stapelung der Zelllagen in Betracht. Ein Wickelprozess zum Aufwickeln der Zelllagen ist derzeit nur schlecht bis kaum realisierbar, da die harschen Bedingungen des zum Herstellen eines guten ionenleitenden Kontakts in dem Wickelprozess nicht gut realisiert werden können.

Ausgehend hiervon war es die Aufgabe der vorliegenden Erfindung, ein Verfahren zur Herstellung von zumindest einem Teil einer Festkörperbatterie bereitzustellen, das die Nachteile aus dem Stand der Technik überwindet. Insbesondere sollte es mit dem Verfahren möglich sein, auf einfache, schnelle, kostengünstige und weniger ausschuss-anfällige Art und Weise zumindest ein Halbzeug einer Festkörperbatterie (d.h. ein Halbzeug einer Festkörperbatterie oder eine vollständige Festkörperbatterie) mit einer hohen spezifischen Kapazität bereitzustellen. Ferner sollte ein Halbzeug einer Festkörperbatterie und eine (bevorzugt gewickelte) Festkörperbatterie mit einer hohen spezifischen Kapazität bereitgestellt werden, das/die sich einfach, schnell und kostengünstig herstellen lässt. Zudem sollten Verwendungen für die Festkörperbatterie vorgeschlagen werden.

Die Aufgabe wird gelöst durch das Verfahren mit den Merkmalen von Anspruch 1, das Halbzeug einer Festkörperbatterie mit den Merkmalen von Anspruch 13, die Festkörperbatterie mit den Merkmalen von Anspruch 14 und die Verwendung mit den Merkmalen von Anspruch 15. Die abhängigen Ansprüche zeigen vorteilhafte Weiterentwicklungen auf.

Erfindungsgemäß wird ein Verfahren zur Herstellung von zumindest einem Halbzeug einer Festkörperbatterie (d.h. einem Halbzeug einer Festkörperbatterie oder einer kompletten Festkörperbatterie) bereitgestellt, umfassend die folgenden Schritte oder bestehend daraus:
a) Herstellung von einem Schichtverbund, wobei zumindest eine Kathodenschicht auf eine erste Seite einer Feststoffelektrolyt-Separatorschicht laminiert wird und eine Anodenschicht auf eine der ersten Seite entgegegengesetzten, zweiten Seite der Feststoffelektrolyt-Separatorschicht laminiert wird, wobei
   i) eine elektrisch leitfähige Ableiterschicht auf eine Seite der Anodenschicht laminiert wird, die der Feststoffelektrolyt-Separatorschicht gegenüberliegt, oder auf eine Seite der Kathodenschicht laminiert wird, die der Feststoffelektrolyt-Separatorschicht gegenüberliegt, aber nicht jeweils eine elektrisch leitfähige Ableiterschicht auf die besagte Seite der Anodenschicht und die besagte Seite der Kathodenschicht laminiert wird; oder
   ii) keine elektrisch leitfähige Ableiterschicht auf die Anodenschicht und keine elektrisch leitfähige Ableiterschicht auf die Kathodenschicht laminiert wird; und
b) Verpressen Schichtverbunds durch Ausübung eines Drucks auf den Schichtverbund in einer Richtung im Wesentlichen senkrecht auf eine Fläche, die von einer lateralen Ausdehnung der Kathodenschicht, der Anodenschicht und der Feststoffelektrolyt-Separatorschicht aufgespannt wird.

Mit dem Verfahren wird eine ionenleitende Verbindung zeitlich vor einer elektronenleitenden Verbindung der Komponenten etabliert. Das Verfahren hat den Vorteil, dass auf einfache, schnelle und kostengünstige Art und Weise zumindest ein Halbzeug einer Festkörperbatterie hergestellt werden kann, das sich durch eine hohe spezifische Kapazität auszeichnet. Ein weiterer Vorteil besteht darin, dass das Halbzeug im Wesentlichen einer Vollzelllage entspricht, die bereits einen guten ionenleitenden Kontakt zwischen Anode, Festelektrolyt-Separator und Kathode aufweist.

Da in dem Schritt zur Herstellung des Schichtverbunds nur maximal eine Elektrodenschicht (Anodenschicht oder Kathodenschicht) mit einer elektrisch leitfähigen Ableiterschicht versehen wird, lässt sich der Schichtverbund einfacher, schneller und kostengünstiger Verpressen und als Halbzeug auf eine Rolle aufwickeln, sowie zum Vollzeug wickeln, stapeln oder falten. Die Möglichkeit des Aufwickelns des Schichtverbunds hat zudem den Vorteil, dass Rundzellen hergestellt werden können, die sowohl ökonomisch als auch ökologisch von Vorteil sind. Ferner zeichnen sich Wickelanlagen generell durch niedrige Anforderungen an die Toleranzen aus, was das Risiko von Ausschuss und eines damit verbundenen Wertverlusts minimiert. Die Herstellung des Schichtverbunds kann zudem kontinuierlich erfolgen (z.B. über ein Rolle-zu-Rolle-Verfahren) und durch Ergänzung von nötigen elektrisch leitfähigen Ableiterschichten nach dem Verpressen des Schichtverbunds kann der verpresste Schichtverbund auf einfache Art und Weise zu einer kompletten Festkörperbatterie weiterverarbeitet werden.

Durch das Verpressen des Schichtverbunds wird zwischen der Anodenschicht, der Feststoffelektrolyt-Separatorschicht und der Kathodenschicht eine innige Verbindung etabliert, die einen sehr guten lonen-leitenden Kontakt zwischen diesen Schichten bereitstellt. Damit ist der Widerstand für den Ionentransport an den Elektroden-Separator-Grenzflächen sehr gering (geringerer Innenwiderstand und niedrigere Grenzflächenwiderstände), was die Leistungsfähigkeit verbessert.

Die in dem Verfahren verwendete Anodenschicht und/oder Kathodenschicht kann vor der Durchführung des Verfahrens freistehend hergestellt werden oder zunächst auf einer Trägerfolie hergestellt werden und dann von der Trägerfolie abgelöst werden.

Die Kathodenschicht kann ein Kathodenaktivmaterial enthalten oder daraus bestehen, das bevorzugt ausgewählt ist aus der Gruppe bestehend aus Interkalationsmaterial für Lithium und/oder Natrium, Konversationsmaterial für Lithium und/oder Natrium, Legierungsmaterial für Lithium und/oder Natrium, und Kombinationen hiervon, wobei das Kathodenaktivmaterial besonders bevorzugt ausgewählt ist aus der Gruppe bestehend aus Schichtoxid, Spinell, Olivin, Cation-disordered rock salt, Konversationsmaterial und Kombinationen hiervon, wobei das Kathodenaktivmaterial besonders bevorzugt ausgewählt ist aus der Gruppe bestehend aus NCM, LMO, LNMO, LFP, DRX, Schwefel, , Lithiumvanadiumphosphat, Preussisch Blau, Preussisch Weiß, Natriumvanadiumphosphat und Kombinationen hiervon.

Ferner kann die Kathodenschicht einen Binder enthalten, bevorzugt einen polymeren Binder enthalten, wobei der Binder bevorzugt ausgewählt ist aus der Gruppe bestehend aus Fluorpolymeren, wobei der Binder besonders bevorzugt ausgewählt aus der Gruppe bestehend aus PTFE, PVDF und Kombinationen hiervon.

Abgesehen davon kann die Kathodenschicht ein elektrisch-leitfähiges Additiv enthalten, das bevorzugt ausgewählt ist aus der Gruppe bestehend aus Leitruß, Graphit, Kohlenstoffnanoröhrchen, Graphen, Vapor grown carbon fibers und Kombinationen hiervon.

Zudem kann die Kathodenschicht ein ionisch-leitfähiges Additiv enthalten, das bevorzugt ausgewählt ist aus der Gruppe bestehend aus polymerer Feststoffelektrolyt, sulfidischer Feststoffelektrolyt, halogenidischer Feststoffelektrolyt, oxidischer Feststoffelektrolyt und Kombinationen hiervon.

Die Kathodenschicht kann eine Dicke, in einer Richtung senkrecht zu einer lateralen Ausdehnung der Kathodenschicht, im Bereich von 25 µm bis 250 µm, bevorzugt im Bereich von 50 µm bis 200 µm, besonders bevorzugt im Bereich von 75 µm bis 150 µm, aufweisen.

Die Anodenschicht kann ein Anodenaktivmaterial enthalten oder daraus bestehen, das bevorzugt ausgewählt ist aus der Gruppe bestehend aus Interkalationsmaterial für Lithium und/oder Natrium, Konversationsmaterial für Lithium und/oder Natrium, Legierungsmaterial für Lithium und/oder Natrium, metallisches Lithium, metallisches Natrium und Kombinationen hiervon, wobei das Anodenaktivmaterialbesonders bevorzugt ausgewählt ist aus der Gruppe bestehend aus metallisches Lithium, metallisches Natrium, Lithiumtitanoxid, Lithiumtitanphosphat, Silizium, prälithiiertes Silizium, Silizium-haltige Zintlphase, Graphit, Hard Carbon und Kombinationen hiervon.

Ferner kann die Anodenschicht ein elektrisch-leitfähiges Additiv enthalten, das bevorzugt ausgewählt ist aus der Gruppe bestehend aus Leitruß, Graphit, Kohlenstoffnanoröhrchen, Graphen, Vapor grown carbon fibers und Kombinationen hiervon.

Abgesehen davon kann die Anodenschicht ein ionisch-leitfähiges Additiv enthalten, das bevorzugt ausgewählt ist aus der Gruppe bestehend aus polymerer Feststoffelektrolyt, sulfidischer Feststoffelektrolyt, halogenidischer Feststoffelektrolyt, oxidischer Feststoffelektrolyt und Kombinationen hiervon.

Die Anodenschicht kann eine Dicke, in einer Richtung senkrecht zu einer lateralen Ausdehnung der Anodenschicht, im Bereich von 1 µm bis 250 µm, bevorzugt 1 µm bis 100 µm, besonders bevorzugt 1 µm bis 50 µm, aufweisen.

Die Feststoffelektrolyt-Separatorschicht kann ein Lithium-leitendes Polymer und/oder ein Natrium-leitendes Polymer enthalten oder daraus bestehen, wobei das Polymer bevorzugt ausgewählt ist aus der Gruppe bestehend aus Poly[bis(2-[2-methoxyethoxy)ethoxy)phosphazene), Polyethylenoxid, Nafion, Succinonitril, Polyacrylnitril und Kombinationen hiervon; .

Ferner kann die Feststoffelektrolyt-Separatorschicht ein Lithium-leitendes Oxid und/oder ein Natrium-leitendes Oxid enthalten oder daraus bestehen, wobei das Oxid bevorzugt ausgewählt ist aus der Gruppe bestehend aus Li₇La₃Zr₂O₁₂, Li_{6,4}La₃Zr_{1,4}Ta_{0,6}O₁₂, LLZO, LLTO und Kombinationen hiervon.

Abgesehen davon kann die Feststoffelektrolyt-Separatorschicht ein Lithium-leitendes Phosphat und/oder ein Natrium-leitendes Phosphat enthalten oder daraus bestehen, wobei das Phosphat bevorzugt ausgewählt ist aus der Gruppe bestehend aus Li_{1,3}Al_{0,3}Ti_{1,7}(PO₄)₃, LATP, NaSICON-Verbindung und Kombinationen hiervon.

Darüber hinaus kann die Feststoffelektrolyt-Separatorschicht ein Lithium-leitendes Sulfid und/oder ein Natrium-leitendes Sulfid enthalten oder daraus bestehen, wobei das Sulfid bevorzugt ausgewählt ist aus der Gruppe bestehend aus aus Li₂-P₂S₅, Li_{9,54}Si_{1,74}P_{1,44}S_{11,7}Cl_{0,3}, Li₆PS₅Cl, Li₆PS₅Br, Li₇SiPS₈, Li₁₀GeP₂S₁₂, Li₁₀SnP₂S₁₂ und Kombinationen hiervon.

Ferner kann die Feststoffelektrolyt-Separatorschicht ein Lithium-leitendes Halogenid und/oder ein Natrium-leitendes Halogenid enthalten oder daraus bestehen, das bevorzugt ausgewählt ist aus der Gruppe bestehend aus Li₃InCl₆, Li₃YCl₆ und Kombinationen hiervon.

Zudem kann die Feststoffelektrolyt-Separatorschicht einen Binder enthalten, der bevorzugt ausgewählt ist aus der Gruppe bestehend aus PTFE, PVDF-HFP, SBR, NBR, HNBR und Kombinationen hiervon.

Die Feststoffelektrolyt-Separatorschicht kann eine Dicke, in einer Richtung senkrecht zu einer lateralen Ausdehnung der Feststoffelektrolyt-Separatorschicht, im Bereich von 1 µm bis 500 µm, bevorzugt 2 µm bis 100 µm, besonders bevorzugt 5 µm bis 30 µm, aufweisen.

In dem Verfahren kann das Herstellen des Schichtverbunds kontinuierlich über ein Rolle-zu-Rolle-Verfahren durchgeführt werden, wobei bevorzugt der Schichtverbund auf einer Rolle geführt wird.

Die Kathodenschicht, die Feststoffelektrolyt-Separatorschicht und die Anodenschicht können jeweils auf einer separaten Rolle geführt werden , wobei bevorzugt die Kathodenschicht, die Feststoffelektrolyt-Separatorschicht und die Anodenschicht in einem Schritt vor einem Aufrollen auf eine weitere Rolle oder auf einer weiteren Rolle durch Verpressen zu einem Verbund laminiert werden.

Alternativ kann die Kathodenschicht und die Feststoffelektrolyt-Separatorschicht als Verbund auf einer ersten Rolle geführt werden und die Anodenschicht auf einer zweiten Rolle geführt werden, wobei bevorzugt der Verbund in einem Schritt vor einem Aufrollen auf eine dritte Rolle oder auf einer dritten Rolle durch Verpressen mit der Anodenschicht zu einem weiteren Verbund laminiert werden.

Als weitere Alternative kann die Anodenschicht und die Feststoffelektrolyt-Separatorschicht als Verbund auf einer ersten Rolle geführt werden und die Kathodenschicht auf einer zweiten Rolle geführt werden, wobei bevorzugt der Verbund in einem Schritt vor einem Aufrollen auf eine dritte Rolle oder auf einer dritten Rolle durch Verpressen mit der Kathodenschicht zu einem weiteren Verbund laminiert werden.

Das Verpressen des Schichtverbunds kann in dem Verfahren vor, während und/oder nach einem Aufwickeln auf einer Rolle erfolgen, auf welche der Schichtverbund im Verfahren aufgewickelt wird.

Ferner kann das Verpressen des Schichtverbunds kontinuierlich erfolgen, bevorzugt mit einer Linienlast von 100 bis 1000 N/mm, besonders bevorzugt mit einer Linienlast von 500 bis 800 N/mm.

Vor dem Verpressen des Schichtverbunds oder nach dem Verpressen des Schichtverbunds kann eine Primerschicht auf die der Feststoffelektrolyt-Separatorschicht gegenüberliegenden Seite der Anodenschicht und/oder auf die der Feststoffelektrolyt-Separatorschicht gegenüberliegenden Seite Kathodenschicht aufgebracht werden. Ferner kann vor dem Verpressen des Schichtverbunds oder nach dem Verpressen des Schichtverbunds eine Primerschicht auf beide Seiten der elektrisch leitfähigen Ableiterschicht aufgebracht werden. Der Vorteil der Primerschicht ist, dass sie die Haftung verbessert, vor allem die Haftung bei einem Aufwickeln des Halbzeugs ohne Verpressen. Ferner verbessert die Primerschicht die Elektronenleitung zwischen den jeweiligen Elektrodenschichten und den jeweiligen elektrisch leifähigen Ableitern verbessern, vor allem in einem Wickel nach einem Aufwickeln des Halbzeugs, um eine Festkörperbatterie (Vollzeug) herzustellen.

Die Primerschicht kann ein elektrisch leitfähiges Material und einen Binder enthalten oder daraus bestehen. Das elektrisch leitfähige Material kann ausgewählt sein aus der Gruppe bestehend ausamorpher Kohlenstoff, graphitischer Kohlenstoff und Kombinationen hiervon. Der Binder kann ausgewählt sein aus der Gruppe bestehend aus CMC, PDVF, und Kombinationen hiervon. In dem Verfahren kann die Primerschicht mit einer Dicke im Bereich von 1 µm bis 10 µm, in einer Richtung senkrecht auf die Primerschicht, aufgebracht werden.

Der zur Herstellung einer kompletten Festkörperbatterie nötige elektronenleitende Kontakt sowohl zur Anodenschicht als auch zur Kathodenschicht wird in dem erfindungsgemäßen Verfahren erst nach dem Verpressen des Schichtverbunds erzeugt. Der Vorteil hierbei ist, dass hierfür ein deutlich geringere Druck als beim Verpressen des Schichtverbunds ausreicht (z.B. eine leichte Verspannung), was Ausschüsse durch auftretende Defekte im Zellstapel verhindert, die im Stand der Technik bei einer Applikation von hohen Drücken auf den kompletten Zellstapel bekannt sind. Zur Herstellung einer vollständigen Festkörperbatterie kann das Verfahren Schritte umfassen, die im Folgenden näher erläutert werden.

Im Folgenden werden zunächst bevorzugte Ausführungsformen des Verfahrens zur Herstellung einer gewickelten (kompletten) Festkörperbatterie beschrieben.

In dem Verfahren kann vor dem Verpressen des Schichtverbunds nur auf der Anodenschicht eine elektrisch leitfähige Ableiterschicht laminiert werden, wobei die elektrisch leitfähige Ableiterschicht auf einer Seite, die der Anodenschicht gegenüberliegt, eine elektrische Isolationsschicht aufweist und die elektrische Isolationsschicht auf einer Seite, die der elektrisch leitfähigen Ableiterschicht gegenüberliegt, eine weitere elektrisch leitfähige Ableiterschicht aufweist. Bevorzugt wird der Schichtverbund einmal in einer Richtung senkrecht auf eine Fläche, die von einer lateralen Ausdehnung des Schichtverbunds aufgespannt wird, geschnitten und dergestalt als Zellwickel aufgewickelt, dass die weitere elektrisch leitfähige Ableiterschicht die Kathodenschicht des Schichtverbunds elektrisch kontaktiert. In einer besonders bevorzugten Ausführungsform weist die elektrisch leitfähige Ableiterschicht in einem ersten Bereich eine größere laterale Ausdehnung als die Anodenschicht auf und die weitere elektrisch leitfähige Ableiterschicht in einem zweiten Bereich, der dem ersten Bereich in einer Richtung entlang einer lateralen Ausdehnung der elektrisch leitfähigen Ableiterschicht gegenüberliegt, eine größere laterale Ausdehnung als die Kathodenschicht auf. Ganz besonders bevorzugt ist die elektrische Isolationsschicht flächenbündig zum ersten Bereich der elektrisch leitfähigen Ableiterschicht und zum zweiten Bereich der weiteren elektrisch leitfähigen Ableiterschicht angeordnet.

Alternativ kann in dem Verfahren vor dem Verpressen des Schichtverbunds nur auf der Kathodenschicht eine elektrisch leitfähige Ableiterschicht laminiert werden, wobei die elektrisch leitfähige Ableiterschicht auf einer Seite, die der Kathodenschicht gegenüberliegt, eine elektrische Isolationsschicht aufweist und die elektrische Isolationsschicht auf einer Seite, die der elektrisch leitfähigen Ableiterschicht gegenüberliegt, eine weitere elektrisch leitfähige Ableiterschicht aufweist. Bevorzugt wird der Schichtverbund einmal in einer Richtung senkrecht auf eine Fläche, die von einer lateralen Ausdehnung des Schichtverbunds aufgespannt wird, geschnitten und dergestalt als Zellwickel aufgewickelt, dass die weitere elektrisch leitfähige Ableiterschicht die Anodenschicht des Schichtverbunds elektrisch kontaktiert. Besonders bevorzugt weist die elektrisch leitfähige Ableiterschicht in einem ersten Bereich eine größere laterale Ausdehnung als die Kathodenschicht auf und die weitere elektrisch leitfähige Ableiterschicht in einem zweiten Bereich, der dem ersten Bereich in einer Richtung entlang einer lateralen Ausdehnung der elektrisch leitfähigen Ableiterschicht gegenüberliegt, eine größere laterale Ausdehnung als die Anodenschicht auf. Ganz besonders bevorzugt ist die elektrische Isolationsschicht flächenbündig zum ersten Bereich der elektrisch leitfähigen Ableiterschicht und zum zweiten Bereich der weiteren elektrisch leitfähigen Ableiterschicht angeordnet.

Ferner kann vor dem Verpressen des Schichtverbunds weder auf die Anodenschicht noch auf die Kathodenschicht eine elektrisch leitfähige Ableiterschicht laminiert werden, wobei nach dem Verpressen des Schichtverbunds eine elektrisch leitfähige Ableiterschicht auf der Anodenschicht aufgebracht wird. Die elektrische Ableiterschicht weist auf einer Seite, die der Anodenschicht gegenüberliegt, eine elektrische Isolationsschicht auf und die elektrische Isolationsschicht weist auf einer Seite, die der elektrisch leitfähigen Ableiterschicht gegenüberliegt, eine weitere elektrisch leitfähige Ableiterschicht auf. Bevorzugt wird der Schichtverbund einmal in einer Richtung senkrecht auf eine Fläche, die von einer lateralen Ausdehnung des Schichtverbunds aufgespannt wird, geschnitten und dergestalt als Zellwickel aufgewickelt, dass die weitere elektrisch leitfähige Ableiterschicht die Kathodenschicht des Schichtverbunds elektrisch kontaktiert. Besonders bevorzugt weist die elektrisch leitfähige Ableiterschicht in einem ersten Bereich eine größere laterale Ausdehnung als die Anodenschicht auf und die weitere elektrisch leitfähige Ableiterschicht in einem zweiten Bereich, der dem ersten Bereich in einer Richtung entlang einer lateralen Ausdehnung der elektrisch leitfähigen Ableiterschicht gegenüberliegt, eine größere laterale Ausdehnung als die Kathodenschicht auf. Ganz besonders bevorzugt ist die elektrische Isolationsschicht flächenbündig zum ersten Bereich der elektrisch leitfähigen Ableiterschicht und zum zweiten Bereich der weiteren elektrisch leitfähigen Ableiterschicht angeordnet.

Alternativ kann vor dem Verpressen des Schichtverbunds weder auf die Anodenschicht noch auf die Kathodenschicht eine elektrisch leitfähige Ableiterschicht laminiert werden, wobei nach dem Verpressen des Schichtverbunds eine elektrisch leitfähige Ableiterschicht auf der Kathodenschicht aufgebracht wird. Die elektrische Ableiterschicht weist auf einer Seite, die der Kathodenschicht gegenüberliegt, eine elektrische Isolationsschicht auf und die elektrische Isolationsschicht weist auf einer Seite, die der elektrisch leitfähigen Ableiterschicht gegenüberliegt, eine weitere elektrisch leitfähige Ableiterschicht auf. Bevorzugt wird der Schichtverbund einmal in einer Richtung senkrecht auf eine Fläche, die von einer lateralen Ausdehnung des Schichtverbunds aufgespannt wird, geschnitten und dergestalt als Zellwickel aufgewickelt, dass die weitere elektrisch leitfähige Ableiterschicht die Anodenschicht des Schichtverbunds elektrisch kontaktiert. Die elektrisch leitfähige Ableiterschicht weist besonders bevorzugt in einem ersten Bereich eine größere laterale Ausdehnung als die Kathodenschicht auf und die weitere elektrisch leitfähige Ableiterschicht in einem zweiten Bereich, der dem ersten Bereich in einer Richtung entlang einer lateralen Ausdehnung der elektrisch leitfähigen Ableiterschicht gegenüberliegt, eine größere laterale Ausdehnung als die Anodenschicht auf. Ganz besonders bevorzugt ist die elektrische Isolationsschicht flächenbündig zum ersten Bereich der elektrisch leitfähigen Ableiterschicht und zum zweiten Bereich der weiteren elektrisch leitfähigen Ableiterschicht angeordnet.

In den genannten Verfahren kann die elektrisch leitfähige Ableiterschicht und/oder die weitere elektrisch leitfähige Ableiterschicht eine Schichtdicke, in einer Richtung senkrecht zu einer lateralen Ausdehnung dieser Schicht, im Bereich von ≤ 5 µm, bevorzugt ≤ 2 µm, aufweisen. Die elektrisch leitfähige Ableiterschicht und/oder die weitere elektrisch leitfähige Ableiterschicht kann auf die elektrische Isolationsschicht aufgedampft werden oder aufgedampft sein.

In den genannten Verfahren kann ferner die elektrische Isolationsschicht eine Schichtdicke, in einer Richtung senkrecht zu einer lateralen Ausdehnung dieser Schicht, im Bereich von ≤ 10 µm, bevorzugt ≤ 5 µm, aufweisen. Abgesehen davon kann die elektrische Isolationsschicht ein Polymer enthalten oder daraus bestehen, wobei das Polymer bevorzugt eine spezifische elektrische Leitfähigkeit von ≤ 10⁻⁸ S/m, bevorzugt ≤ 10⁻¹⁰ S/m, aufweist.

In einer weiteren, optionalen Ausführungsform (Variante) des Verfahrens kann vor dem Verpressen des Schichtverbunds auf die Anodenschicht und auf die Kathodenschicht keine elektrisch leitfähige Ableiterschicht laminiert werden, und in einem Schritt nach dem Verpressen eine erste elektrisch leitfähigen Ableiterschicht auf die Anodenschicht und eine zweite elektrisch leitfähigen Ableiterschicht auf die Kathodenschicht aufgebracht werden, optional laminiert werden.

In dieser Ausführungsform des Verfahrens kann auf einer Seite der ersten elektrisch leitfähigen Ableiterschicht, die der Anodenschicht gegenüberliegt, eine weitere Anodenschicht laminiert werden, auf der eine weitere Feststoffelektrolyt-Separatorschicht laminiert ist, wobei auf der weiteren Feststoffelektrolyt-Separatorschicht eine weitere Kathodenschicht laminiert ist. Bevorzugt wird der Schichtverbund einmal in einer Richtung senkrecht auf eine Fläche, die von einer lateralen Ausdehnung des Schichtverbunds aufgespannt wird, geschnitten und dergestalt als Zellwickel aufgewickelt, dass die zweite elektrisch leitfähige Ableiterschicht die weitere Kathodenschicht des Schichtverbunds elektrisch kontaktiert. Besonders bevorzugt weist die erste elektrisch leitfähige Ableiterschicht in einem ersten Bereich eine größere laterale Ausdehnung als die Anodenschicht auf und die zweite elektrisch leitfähige Ableiterschicht in einem zweiten Bereich, der dem ersten Bereich in einer Richtung entlang einer lateralen Ausdehnung der elektrisch leitfähigen Ableiterschicht gegenüberliegt, eine größere laterale Ausdehnung als die Kathodenschicht auf.

Ferner kann in dieser Ausführungsform des Verfahrens auf einer Seite der ersten elektrisch leitfähigen Ableiterschicht, die der Kathodenschicht gegenüberliegt, eine weitere Kathodenschicht laminiert werden, auf der eine weitere Feststoffelektrolyt-Separatorschicht laminiert ist, wobei auf der weiteren Feststoffelektrolyt-Separatorschicht eine weitere Anodenschicht laminiert ist. Bevorzugt wird der Schichtverbund einmal in einer Richtung senkrecht auf eine Fläche, die von einer lateralen Ausdehnung des Schichtverbunds aufgespannt wird, geschnitten und dergestalt als Zellwickel aufgewickelt, dass die erste elektrisch leitfähige Ableiterschicht die weitere Anodenschicht des Schichtverbunds elektrisch kontaktiert. Besonders bevorzugt weist die erste elektrisch leitfähige Ableiterschicht in einem ersten Bereich eine größere laterale Ausdehnung als die Anodenschicht auf und die zweite elektrisch leitfähige Ableiterschicht in einem zweiten Bereich, der dem ersten Bereich in einer Richtung entlang einer lateralen Ausdehnung der elektrisch leitfähige Ableiterschicht gegenüberliegt, eine größere laterale Ausdehnung als die Kathodenschicht auf.

Die erste elektrisch leitfähige Ableiterschicht und/oder zweite elektrisch leitfähige Ableiterschicht kann eine Schichtdicke im Bereich von ≤ 15 µm, bevorzugt ≤ 10 µm, aufweisen.

Im Folgenden werden nun zudem bevorzugte Ausführungsformen des Verfahrens zur Herstellung einer gestapelten oder gefalteten (kompletten) Festkörperbatterie beschrieben.

In dem Verfahren kann (zur Herstellung einer gestapelten Festkörperbatterie) nach dem Verpressen des Schichtverbunds der Schichtverbund in einer Richtung senkrecht auf eine Fläche, die von einer lateralen Ausdehnung der Kathodenschicht, der Anodenschicht und der Feststoffelektrolyt-Separatorschicht aufgespannt wird, in eine Vielzahl von Schichtverbänden geschnitten werden und die Vielzahl der Schichtverbände in einer gleichen Orientierung gestapelt werden, wobei zwischen den Schichtverbänden eine elektrisch leitfähige Ableiterschicht angeordnet wird, wobei die elektrisch leitfähige Ableiterschicht auf einer Seite eine elektrische Isolationsschicht aufweist und die elektrische Isolationsschicht auf einer Seite, die der elektrisch leitfähigen Ableiterschicht gegenüberliegt, eine weitere elektrisch leitfähige Ableiterschicht aufweist.

Alternativ kann nach dem Verpressen des Schichtverbunds der Schichtverbund (zur Herstellung einer gestapelten Festkörperbatterie) in einer Richtung senkrecht auf eine Fläche, die von einer lateralen Ausdehnung der Kathodenschicht, der Anodenschicht und der Feststoffelektrolyt-Separatorschicht aufgespannt wird, in eine Vielzahl von Schichtverbänden geschnitten werden und die Vielzahl der Schichtverbände in einer wechselseitigen Orientierung gestapelt werden, wobei zwischen den Schichtverbänden ein elektrisch leitfähiger Ableiter angeordnet wird.

Als weitere Alternative kann in dem Verfahren nach dem Verpressen des Schichtverbunds (zur Herstellung einer gefalteten Festkörperbatterie) in einer Richtung senkrecht auf eine Fläche, die von einer lateralen Ausdehnung der Kathodenschicht, der Anodenschicht und der Feststoffelektrolyt-Separatorschicht aufgespannt wird, einmal geschnitten werden und der Schichtverbund durch Falten, bevorzugt Z-Falten, gestapelt werden, wobei zwischen aufeinander gefalteten Abschnitten des Schichtverbunds jeweils ein elektrisch leitfähiger Ableiter angeordnet wird.

Erfindungsgemäß wird ferner ein Halbzeug einer Festkörperbatterie bereitgestellt, das über ein oben beschriebenes, erfindungsgemäßes Verfahren hergestellt ist.

Ferner wird erfindungsgemäß eine Festkörperbatterie bereitgestellt, die über ein oben beschriebenes, erfindungsgemäßes Verfahren hergestellt ist. Bevorzugt handelt es sich bei der Festkörperbatterie um eine gewickelte Festkörperbatterie, die über ein oben beschriebenes, erfindungsgemäßes Verfahren hergestellt ist. Die Festkörperbatterie kann jedoch auch eine gestapelte oder gefaltete Festkörperbatterie sein, die über ein oben beschriebenes, erfindungsgemäßes Verfahren hergestellt ist.

Unter dem Begriff "Festkörperbatterie" wird eine Batterie ohne flüssige Komponenten verstanden.

Eine über das erfindungsgemäße Verfahren hergestellte Festkörperbatterie kann zur Energieversorgung einer mobilen Vorrichtung (z.B. eines Automobils) und/oder zur Energieversorgung einer stationären Vorrichtung (z.B. eines Gebäudes) verwendet werden.

Anhand der nachfolgenden Figuren soll der erfindungsgemäße Gegenstand näher erläutert werden, ohne diesen auf die hier dargestellten, spezifischen Ausgestaltungsformen einschränken zu wollen.

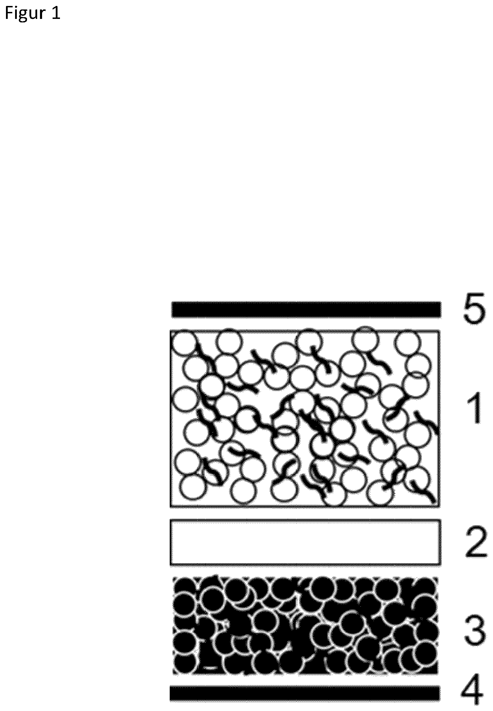

Figur 1 zeigt eine allgemeine, im Stand der Technik bekannte, Festkörperbatterie (Vollzelle). Die Festkörperbatterie besteht aus einer Kathodenschicht 1, Feststoffelektrolyt-Separatorschicht 2, einer Anodenschicht 3, einer ersten elektrisch leitfähigen Ableiterschicht 4 und einer weiteren elektrischen leitfähigen Ableiterschicht 5. Wesentlich ist Feststoffelektrolyt-Separatorschicht 2, welche die Kathodenschicht 1 von der Anodenschicht 2 elektrisch isoliert, aber eine lonenleitung zwischen der Kathodenschicht 1 und der Anodenschicht 2 zulässt.

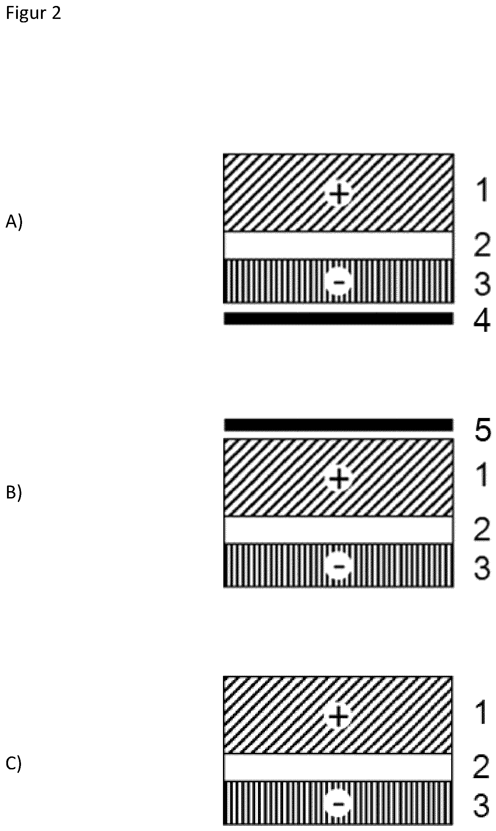

Figuren 2A, 2B und 2C zeigen drei Alternativen des erfindungsgemäßen Verfahrens zur Herstellung eines Halbzeugs einer Festkörperbatterie (Halbzelle). In Figur 2A ist die Herstellung eines Halbzeugs einer Festkörperbatterie dargestellt, bei dem eine elektrisch leitfähige Ableiterschicht 4 auf eine Seite der Anodenschicht 3 laminiert wird, die der Feststoffelektrolyt-Separatorschicht 2 gegenüberliegt. In Figur 2B ist die Herstellung eines Halbzeugs einer Festkörperbatterie dargestellt, bei dem eine elektrisch leitfähige Ableiterschicht 5 auf eine Seite der Kathodenschicht 1 laminiert wird, die der Feststoffelektrolyt-Separatorschicht 2 gegenüberliegt. In Figur 2C ist die Herstellung eines Halbzeugs einer Festkörperbatterie dargestellt, bei dem weder auf die Kathodenschicht 1 noch auf die Anodenschicht 2 eine elektrisch leitfähige Ableiterschicht laminiert wird.

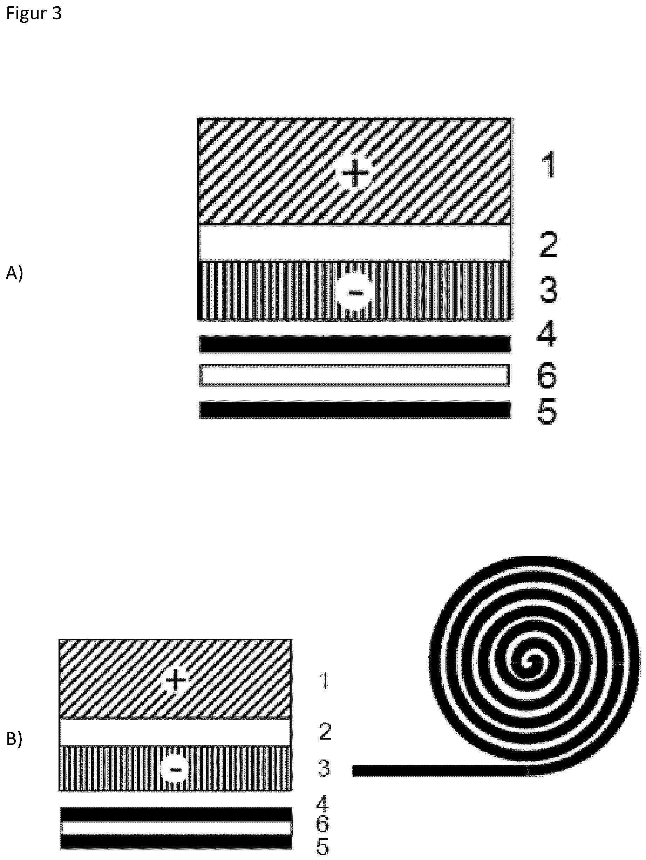

Figur 3A zeigt eine Ausführungsform (Variante) des erfindungsgemäßen Verfahrens zur Herstellung einer Festkörperbatterie (Vollzelle). In dieser Ausführungsform wird auf die Anodenschicht 3 eine leitfähige Ableiterschicht 4 aufgebracht, die auf einer Seite, die der Anodenschicht 3 gegenüberliegt, eine elektrische Isolationsschicht 6 aufweist, wobei die elektrische Isolationsschicht 6 auf einer Seite, die der elektrisch leitfähigen Ableiterschicht 4 gegenüberliegt, eine weitere elektrisch leitfähigen Ableiterschicht 5 aufweist. Die Festkörperbatterie (Vollzelle) kann hergestellt werden, indem die weitere elektrische Ableiterschicht 5 mit der Kathodenschicht 1 elektrisch kontaktiert wird. Dies kann beispielsweise durch Aufwickeln des Halbzeugs erfolgen (zur Herstellung einer gewickelten Festkörperbatterie), oder durch Schneiden und entsprechendes Stapeln des Halbzeugs erfolgen (zur Herstellung einer gestapelten Festkörperbatterie). Die elektrische Isolationsschicht 6 sorgt hierbei für eine elektrische Isolation zwischen der elektrisch leitfähigen Ableiterschicht 4 und der weiteren elektrisch leitfähigen Ableiterschicht 5. Figur 3B illustriert schematisch das Aufwickeln des Halbzeugs zur Herstellung einer gewickelten Festkörperbatterie (Vollzeug).

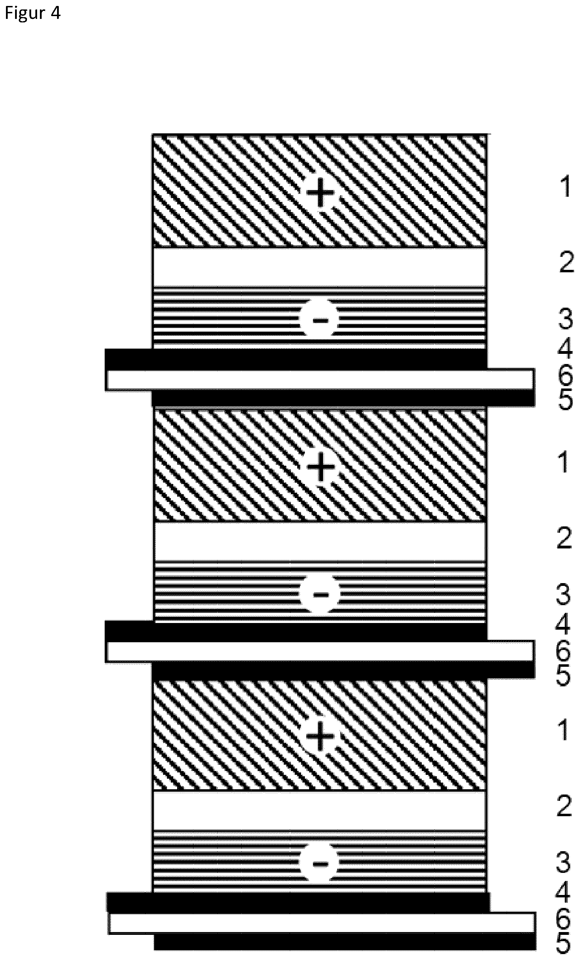

Figur 4 zeigt eine bevorzugte Ausführungsform des erfindungsgemäßen Verfahrens. Dargestellt ist ein Querschnitt aus einem Wickel der exemplarisch aus drei Lagen eines Halbzeugs, der eine Festkörperbatterie (Vollzeug) ausbildet, besteht. In dieser Ausführungsform weist die erste elektrisch leitfähige Ableiterschicht 4 in einem ersten Bereich eine größere laterale Ausdehnung als die Anodenschicht 3 auf und die weitere elektrisch leitfähige Ableiterschicht 5 in einem zweiten Bereich, der dem ersten Bereich in einer Richtung entlang einer lateralen Ausdehnung der elektrisch leitfähigen Ableiterschicht 4 gegenüberliegt, eine größere laterale Ausdehnung als die Kathodenschicht 1 auf. Dadurch wird eine bessere Zugänglichkeit der ersten elektrisch leitfähige Ableiterschicht 4 und der weiteren elektrisch leitfähige Ableiterschicht 5 ermöglicht, was deren elektrische Kontaktierung vereinfacht.

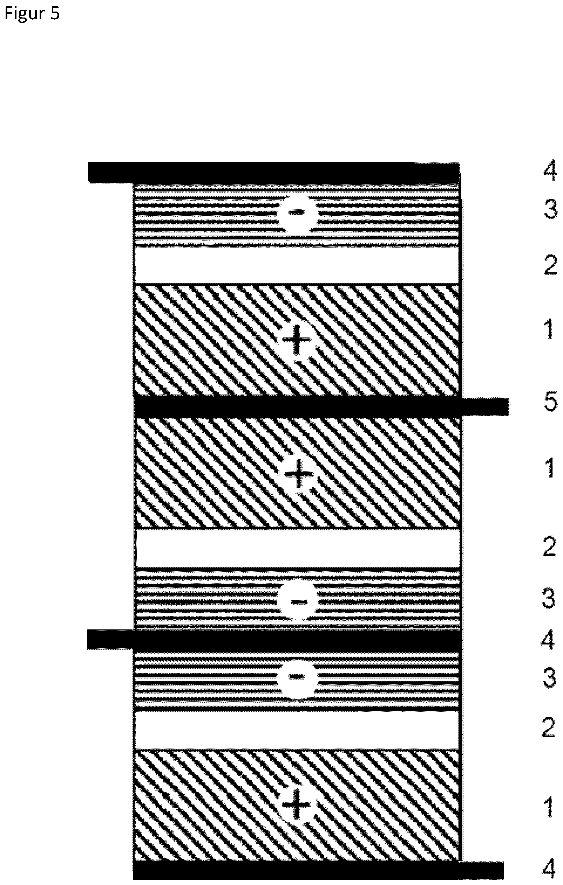

Figur 5 zeigt eine weitere bevorzugte Ausführungsform des erfindungsgemäßen Verfahrens. Dargestellt ist ein Stapel aus drei Lagen eines Halbzeugs, der eine Festkörperbatterie (Vollzeug) ausbildet. In dieser Ausführungsform weist die erste elektrisch leitfähige Ableiterschicht 4 in einem ersten Bereich eine größere laterale Ausdehnung als die Anodenschicht 3 auf und die weitere elektrisch leitfähige Ableiterschicht 5 in einem zweiten Bereich, der dem ersten Bereich in einer Richtung entlang einer lateralen Ausdehnung der elektrisch leitfähigen Ableiterschicht 4 gegenüberliegt, eine größere laterale Ausdehnung als die Kathodenschicht 1 auf. Dadurch wird eine bessere Zugänglichkeit der ersten elektrisch leitfähige Ableiterschicht 4 und der weiteren elektrisch leitfähige Ableiterschicht 5 ermöglicht, was deren elektrische Kontaktierung vereinfacht. Der Stapel kann beispielsweise hergestellt werden, indem in dem Verfahren vor dem Verpressen des Schichtverbunds keine elektrisch leitfähige Schicht auf die Kathodenschicht 1 und Anodenschicht aufgebracht wird, also ein Halbzeug ohne elektrisch leitfähige Schicht hergestellt wird, und nach dem Verpressen des Schichtverbunds ein Z-Spatel aus dem Halbzeug gebildet wird, wobei zwischen übereinander zum Liegen kommenden Anodenschichten 3 jeweils eine elektrisch leitfähige Schicht 4 angeordnet wird und zwischen übereinander zum Liegen kommenden Kathodenschichten 1 jeweils eine weitere elektrisch leitfähige Schicht 5 angeordnet wird.

### Bezugszeichenliste

- 1:: Kathodenschicht;
- 2:: Feststoffelektrolyt-Separatorschicht;
- 3:: Anodenschicht;
- 4:: erste elektrisch leitfähige Ableiterschicht;
- 5:: weitere bzw. zweite elektrisch leitfähige Ableiterschicht;
- 6:: elektrische Isolationsschicht.

## Patentansprüche

1. Verfahren zur Herstellung von zumindest einem Halbzeug einer Festkörperbatterie, umfassend die folgenden Schritte oder bestehend daraus:
a) Herstellung von einem Schichtverbund, wobei zumindest eine Kathodenschicht auf eine erste Seite einer Feststoffelektrolyt-Separatorschicht laminiert wird und eine Anodenschicht auf eine der ersten Seite entgegengesetzten, zweiten Seite der Feststoffelektrolyt-Separatorschicht laminiert wird, wobei
i) eine elektrisch leitfähige Ableiterschicht auf eine Seite der Anodenschicht laminiert wird, die der Feststoffelektrolyt-Separatorschicht gegenüberliegt, oder auf eine Seite der Kathodenschicht laminiert wird, die der Feststoffelektrolyt-Separatorschicht gegenüberliegt, aber nicht jeweils eine elektrisch leitfähige Ableiterschicht auf die besagte Seite der Anodenschicht und die besagte Seite der Kathodenschicht laminiert wird; oder
ii) keine elektrisch leitfähige Ableiterschicht auf die Anodenschicht und keine elektrisch leitfähige Ableiterschicht auf die Kathodenschicht laminiert wird; und
b) Verpressen Schichtverbunds durch Ausübung eines Drucks auf den Schichtverbund in einer Richtung im Wesentlichen senkrecht auf eine Fläche, die von einer lateralen Ausdehnung der Kathodenschicht, der Anodenschicht und der Feststoffelektrolyt-Separatorschicht aufgespannt wird.

2. Verfahren gemäß Anspruch 1, **dadurch gekennzeichnet, dass** die Kathodenschicht
i) ein Kathodenaktivmaterial enthält oder daraus besteht, das bevorzugt ausgewählt ist aus der Gruppe bestehend aus Interkalationsmaterial für Lithium und/oder Natrium, Konversationsmaterial für Lithium und/oder Natrium, Legierungsmaterial für Lithium und/oder Natrium, und Kombinationen hiervon, wobei das Kathodenaktivmaterial besonders bevorzugt ausgewählt ist aus der Gruppe bestehend aus Schichtoxid, Spinell, Olivin, Cation-disordered rock salt, Konversationsmaterial und Kombinationen hiervon, wobei das Kathodenaktivmaterial besonders bevorzugt ausgewählt ist aus der Gruppe bestehend aus NCM, LMO, LNMO, LFP, DRX, Schwefel, , Lithiumvanadiumphosphat, Preussisch Blau, Preussisch Weiß, Natriumvanadiumphosphat und Kombinationen hiervon; und/oder
ii) einen Binder enthält, bevorzugt einen polymeren Binder enthält, wobei der Binder bevorzugt ausgewählt ist aus der Gruppe bestehend aus Fluorpolymeren, wobei der Binder besonders bevorzugt ausgewählt aus der Gruppe bestehend aus PTFE, PVDF und Kombinationen hiervon; und/oder
iii) ein elektrisch-leitfähiges Additiv enthält, das bevorzugt ausgewählt ist aus der Gruppe bestehend aus Leitruß, Graphit, Kohlenstoffnanoröhrchen, Graphen, Vapor grown carbon fibers und Kombinationen hiervon; und/oder
iv) ein ionisch-leitfähiges Additiv enthält, das bevorzugt ausgewählt ist aus der Gruppe bestehend aus polymerer Feststoffelektrolyt, sulfidischer Feststoffelektrolyt, halogenidischer Feststoffelektrolyt, oxidischer Feststoffelektrolyt und Kombinationen hiervon; und/oder
v) eine Dicke, in einer Richtung senkrecht zu einer lateralen Ausdehnung der Kathodenschicht, im Bereich von 25 µm bis 250 µm, bevorzugt im Bereich von 50 µm bis 200 µm, besonders bevorzugt im Bereich von 75 µm bis 150 µm, aufweist.

3. Verfahren gemäß einem der Ansprüche 1 oder 2, **dadurch gekennzeichnet, dass** die Anodenschicht
i) ein Anodenaktivmaterial enthält oder daraus besteht, das bevorzugt ausgewählt ist aus der Gruppe bestehend aus Interkalationsmaterial für Lithium und/oder Natrium, Konversationsmaterial für Lithium und/oder Natrium, Legierungsmaterial für Lithium und/oder Natrium, metallisches Lithium, metallisches Natrium und Kombinationen hiervon, wobei das Anodenaktivmaterial besonders bevorzugt ausgewählt ist aus der Gruppe bestehend aus metallisches Lithium, metallisches Natrium, Lithiumtitanoxid, Lithiumtitanphosphat, Silizium, prälithiiertes Silizium, Silizium-haltige Zintlphase, Graphit, Hard Carbon und Kombinationen hiervon; und/oder
ii) ein elektrisch-leitfähiges Additiv enthält, das bevorzugt ausgewählt ist aus der Gruppe bestehend aus Leitruß, Graphit, Kohlenstoffnanoröhrchen, Graphen, Vapor grown carbon fibers und Kombinationen hiervon; und/oder
iii) ein ionisch-leitfähiges Additiv enthält, das bevorzugt ausgewählt ist aus der Gruppe bestehend aus polymerer Feststoffelektrolyt, sulfidischer Feststoffelektrolyt, halogenidischer Feststoffelektrolyt, oxidischer Feststoffelektrolyt und Kombinationen hiervon; und/oder
iv) eine Dicke, in einer Richtung senkrecht zu einer lateralen Ausdehnung der Anodenschicht, im Bereich von 1 µm bis 250 µm, bevorzugt 1 µm bis 100 µm, besonders bevorzugt 1 µm bis 50 µm, aufweist

4. Verfahren gemäß einem der Ansprüche 1 bis 3, **dadurch gekennzeichnet, dass** die Feststoffelektrolyt-Separatorschicht
i) ein Lithium-leitendes Polymer und/oder ein Natrium-leitendes Polymer enthält oder daraus besteht, wobei das Polymer bevorzugt ausgewählt ist aus der Gruppe bestehend aus Poly[bis(2-[2-methoxyethoxy)ethoxy)phosphazene), Polyethylenoxid, Nafion, Succinonitril, Polyacrylnitril, und Kombinationen hiervon; und/oder
ii) ein Lithium-leitendes Oxid und/oder ein Natrium-leitendes Oxid enthält oder daraus besteht, wobei das Oxid bevorzugt ausgewählt ist aus der Gruppe bestehend aus Li₇La₃Zr₂O₁₂, Li_{6,4}La₃Zr_{1,4}Ta_{0,6}O₁₂, LLZO, LLTO und Kombinationen hiervon; und/oder
iii) ein Lithium-leitendes Phosphat und/oder ein Natrium-leitendes Phosphat enthält oder daraus besteht, wobei das Phosphat bevorzugt ausgewählt ist aus der Gruppe bestehend aus Li_{1,3}Al_{0,3}Ti_{1,7}(PO₄)₃, LATP, NaSICON-Verbindung und Kombinationen hiervon; und/oder
iv) ein Lithium-leitendes Sulfid und/oder ein Natrium-leitendes Sulfid enthält oder daraus besteht, wobei das Sulfid bevorzugt ausgewählt ist aus der Gruppe bestehend aus Li₂-P₂S₅, Li_{9,54}Si_{1,74}P_{1,44}S_{11,7}Cl_{0,3}, Li₆PS₅Cl, Li₆PS₅Br, Li₇SiPS₈, Li₁₀GeP₂S₁₂, Li₁₀SnP₂S₁₂ und Kombinationen hiervon; und/oder
v) ein Lithium-leitendes Halogenid und/oder ein Natrium-leitendes Halogenid enthält oder daraus besteht, das bevorzugt ausgewählt ist aus der Gruppe bestehend aus Li₃InCl₆, Li₃YCl₆ und Kombinationen hiervon; und/oder
vi) einen Binder enthält, der bevorzugt ausgewählt ist aus der Gruppe bestehend aus PTFE, PVDF-HFP, SBR, NBR, HNBR und Kombinationen hiervon; und/oder
vii) eine Dicke, in einer Richtung senkrecht zu einer lateralen Ausdehnung der Feststoffelektrolyt-Separatorschicht, im Bereich von 1 µm bis 500 µm, bevorzugt 2 µm bis 100 µm, besonders bevorzugt 5 µm bis 30 µm, aufweist

5. Verfahren gemäß einem der Ansprüche 1 bis 4, **dadurch gekennzeichnet, dass** das Herstellen des Schichtverbunds kontinuierlich über ein Rolle-zu-Rolle-Verfahren durchgeführt wird, wobei bevorzugt der Schichtverbund auf einer Rolle geführt wird, und besonders bevorzugt
i) die Kathodenschicht, die Feststoffelektrolyt-Separatorschicht und die Anodenschicht jeweils auf einer separaten Rolle geführt werden, wobei bevorzugt die Kathodenschicht, die Feststoffelektrolyt-Separatorschicht und die Anodenschicht in einem Schritt vor einem Aufrollen auf eine weitere Rolle oder auf einer weiteren Rolle durch Verpressen zu einem Verbund laminiert werden, oder
ii) die Kathodenschicht und die Feststoffelektrolyt-Separatorschicht als Verbund auf einer ersten Rolle geführt wird und die Anodenschicht auf einer zweiten Rolle geführt wird, wobei bevorzugt der Verbund in einem Schritt vor einem Aufrollen auf eine dritte Rolle oder auf einer dritten Rolle durch Verpressen mit der Anodenschicht zu einem weiteren Verbund laminiert werden; oder
iii) die Anodenschicht und die Feststoffelektrolyt-Separatorschicht als Verbund auf einer ersten Rolle geführt wird und die Kathodenschicht auf einer zweiten Rolle geführt wird, wobei bevorzugt der Verbund in einem Schritt vor einem Aufrollen auf eine dritte Rolle oder auf einer dritten Rolle durch Verpressen mit der Kathodenschicht zu einem weiteren Verbund laminiert werden.

6. Verfahren gemäß einem der Ansprüche 1 bis 5, **dadurch gekennzeichnet, dass** das Verpressen des Schichtverbunds
i) vor, während und/oder nach einem Aufwickeln auf einer Rolle erfolgt, auf welche der Schichtverbund im Verfahren aufgewickelt wird; und/oder
ii) kontinuierlich erfolgt, bevorzugt mit einer Linienlast von 100 bis 1000 N/mm, besonders bevorzugt mit einer Linienlast von 500 bis 800 N/mm.

7. Verfahren gemäß einem der Ansprüche 1 bis 6, **dadurch gekennzeichnet, dass** vor dem Verpressen des Schichtverbunds oder nach dem Verpressen des Schichtverbunds eine Primerschicht
i) auf die der Feststoffelektrolyt-Separatorschicht gegenüberliegenden Seite der Anodenschicht und/oder auf die der Feststoffelektrolyt-Separatorschicht gegenüberliegenden Seite Kathodenschicht aufgebracht wird; und/oder
ii) auf beide Seiten der elektrisch leitfähigen Ableiterschicht aufgebracht wird;
wobei die Primerschicht bevorzugt ein elektrisch leitfähiges Material und einen Binder enthält oder daraus besteht, wobei das elektrisch leitfähige Material besonders bevorzugt ausgewählt ist aus der Gruppe bestehend aus amorphem Kohlenstoff, graphitischer Kohlenstoff und Kombinationen hiervon und/oder der Binder besonders bevorzugt ausgewählt ist aus der Gruppe bestehend aus CMC, PDVF, und Kombinationen hiervon, wobei die Primerschicht optional bis zu einer Dicke im Bereich von 1 µm bis 10 µm, in einer Richtung senkrecht auf die Primerschicht, aufgebracht wird.

8. Verfahren gemäß einem der Ansprüche 1 bis 7, **dadurch gekennzeichnet, dass** vor dem Verpressen des Schichtverbunds nur auf der
i) Anodenschicht eine elektrisch leitfähige Ableiterschicht laminiert wird, wobei die elektrisch leitfähige Ableiterschicht auf einer Seite, die der Anodenschicht gegenüberliegt, eine elektrische Isolationsschicht aufweist und die elektrische Isolationsschicht auf einer Seite, die der elektrisch leitfähigen Ableiterschicht gegenüberliegt, eine weitere elektrisch leitfähige Ableiterschicht aufweist, wobei der Schichtverbund bevorzugt einmal in einer Richtung senkrecht auf eine Fläche, die von einer lateralen Ausdehnung des Schichtverbunds aufgespannt wird, geschnitten wird und dergestalt als Zellwickel aufgewickelt wird, dass die weitere elektrisch leitfähige Ableiterschicht die Kathodenschicht des Schichtverbunds elektrisch kontaktiert, wobei die elektrisch leitfähige Ableiterschicht besonders bevorzugt in einem ersten Bereich eine größere laterale Ausdehnung als die Anodenschicht aufweist und die weitere elektrisch leitfähige Ableiterschicht in einem zweiten Bereich, der dem ersten Bereich in einer Richtung entlang einer lateralen Ausdehnung der elektrisch leitfähigen Ableiterschicht gegenüberliegt, eine größere laterale Ausdehnung als die Kathodenschicht aufweist, wobei die elektrische Isolationsschicht ganz besonders bevorzugt flächenbündig zum ersten Bereich der elektrisch leitfähigen Ableiterschicht und zum zweiten Bereich der weiteren elektrisch leitfähigen Ableiterschicht angeordnet ist; oder
ii) Kathodenschicht eine elektrisch leitfähige Ableiterschicht laminiert wird, wobei die elektrisch leitfähige Ableiterschicht auf einer Seite, die der Kathodenschicht gegenüberliegt, eine elektrische Isolationsschicht aufweist und die elektrische Isolationsschicht auf einer Seite, die der elektrisch leitfähigen Ableiterschicht gegenüberliegt, eine weitere elektrisch leitfähige Ableiterschicht aufweist, wobei der Schichtverbund bevorzugt einmal in einer Richtung senkrecht auf eine Fläche, die von einer lateralen Ausdehnung des Schichtverbunds aufgespannt wird, geschnitten wird und dergestalt als Zellwickel aufgewickelt wird, dass die weitere elektrisch leitfähige Ableiterschicht die Anodenschicht des Schichtverbunds elektrisch kontaktiert, wobei die elektrisch leitfähige Ableiterschicht besonders bevorzugt in einem ersten Bereich eine größere laterale Ausdehnung als die Kathodenschicht aufweist und die weitere elektrisch leitfähige Ableiterschicht in einem zweiten Bereich, der dem ersten Bereich in einer Richtung entlang einer lateralen Ausdehnung der elektrisch leitfähigen Ableiterschicht gegenüberliegt, eine größere laterale Ausdehnung als die Anodenschicht aufweist, wobei die elektrische Isolationsschicht ganz besonders bevorzugt flächenbündig zum ersten Bereich der elektrisch leitfähigen Ableiterschicht und zum zweiten Bereich der weiteren elektrisch leitfähigen Ableiterschicht angeordnet ist.

9. Verfahren gemäß einem der Ansprüche 1 bis 7, **dadurch gekennzeichnet, dass** vor dem Verpressen des Schichtverbunds weder auf die Anodenschicht noch auf die Kathodenschicht eine elektrisch leitfähige Ableiterschicht laminiert wird, wobei nach dem Verpressen des Schichtverbunds eine elektrisch leitfähige Ableiterschicht auf
i) der Anodenschicht aufgebracht wird, wobei die elektrische Ableiterschicht auf einer Seite, die der Anodenschicht gegenüberliegt, eine elektrische Isolationsschicht aufweist und die elektrische Isolationsschicht auf einer Seite, die der elektrisch leitfähigen Ableiterschicht gegenüberliegt, eine weitere elektrisch leitfähigen Ableiterschicht aufweist, wobei der Schichtverbund bevorzugt einmal in einer Richtung senkrecht auf eine Fläche, die von einer lateralen Ausdehnung des Schichtverbunds aufgespannt wird, geschnitten wird und dergestalt als Zellwickel aufgewickelt wird, dass die weitere elektrisch leitfähige Ableiterschicht die Kathodenschicht des Schichtverbunds elektrisch kontaktiert, wobei die elektrisch leitfähige Ableiterschicht besonders bevorzugt in einem ersten Bereich eine größere laterale Ausdehnung als die Anodenschicht aufweist und die weitere elektrisch leitfähige Ableiterschicht in einem zweiten Bereich, der dem ersten Bereich in einer Richtung entlang einer lateralen Ausdehnung der elektrisch leitfähigen Ableiterschicht gegenüberliegt, eine größere laterale Ausdehnung als die Kathodenschicht aufweist, wobei die elektrische Isolationsschicht ganz besonders bevorzugt flächenbündig zum ersten Bereich der elektrisch leitfähigen Ableiterschicht und zum zweiten Bereich der weiteren elektrisch leitfähigen Ableiterschicht angeordnet ist; oder
ii) der Kathodenschicht aufgebracht wird, wobei die elektrische Ableiterschicht auf einer Seite, die der Kathodenschicht gegenüberliegt, eine elektrische Isolationsschicht aufweist und die elektrische Isolationsschicht auf einer Seite, die der elektrisch leitfähigen Ableiterschicht gegenüberliegt, eine weitere elektrisch leitfähigen Ableiterschicht aufweist, wobei der Schichtverbund bevorzugt einmal in einer Richtung senkrecht auf eine Fläche, die von einer lateralen Ausdehnung des Schichtverbunds aufgespannt wird, geschnitten wird und dergestalt als Zellwickel aufgewickelt wird, dass die weitere elektrisch leitfähige Ableiterschicht die Anodenschicht des Schichtverbunds elektrisch kontaktiert, wobei die elektrisch leitfähige Ableiterschicht besonders bevorzugt in einem ersten Bereich eine größere laterale Ausdehnung als die Kathodenschicht aufweist und die weitere elektrisch leitfähige Ableiterschicht in einem zweiten Bereich, der dem ersten Bereich in einer Richtung entlang einer lateralen Ausdehnung der elektrisch leitfähigen Ableiterschicht gegenüberliegt, eine größere laterale Ausdehnung als die Anodenschicht aufweist, wobei die elektrische Isolationsschicht ganz besonders bevorzugt flächenbündig zum ersten Bereich der elektrisch leitfähigen Ableiterschicht und zum zweiten Bereich der weiteren elektrisch leitfähigen Ableiterschicht angeordnet ist.

10. Verfahren gemäß einem der Ansprüche 8 oder 9, **dadurch gekennzeichnet, dass**
i) die elektrisch leitfähige Ableiterschicht und/oder weitere elektrisch leitfähige Ableiterschicht eine Schichtdicke, in einer Richtung senkrecht zu einer lateralen Ausdehnung dieser Schicht, im Bereich von ≤ 5 µm, bevorzugt ≤ 2 µm, aufweist, wobei die elektrisch leitfähige Ableiterschicht und/oder weitere elektrisch leitfähige Ableiterschicht bevorzugt auf die elektrische Isolationsschicht aufgedampft wird oder aufgedampft ist; und/oder
ii) die elektrische Isolationsschicht eine Schichtdicke, in einer Richtung senkrecht zu einer lateralen Ausdehnung dieser Schicht, im Bereich von ≤ 10 µm, bevorzugt ≤ 5 µm, aufweist und/oder in Polymer enthält oder daraus besteht, wobei das Polymer bevorzugt eine spezifische elektrische Leitfähigkeit von ≤ 10⁻⁸ S/m, bevorzugt ≤ 10⁻¹⁰ S/m, aufweist.

11. Verfahren gemäß einem der Ansprüche 1 bis 7, **dadurch gekennzeichnet, dass** vor dem Verpressen des Schichtverbunds auf die Anodenschicht und auf die Kathodenschicht keine elektrisch leitfähige Ableiterschicht laminiert wird, und in einem Schritt nach dem Verpressen eine erste elektrisch leitfähigen Ableiterschicht auf die Anodenschicht und eine zweite elektrisch leitfähigen Ableiterschicht auf die Kathodenschicht aufgebracht wird, optional laminiert wird, wobei bevorzugt
i) auf einer Seite der ersten elektrisch leitfähigen Ableiterschicht, die der Anodenschicht gegenüberliegt, eine weitere Anodenschicht laminiert wird, auf der eine weitere Feststoffelektrolyt-Separatorschicht laminiert ist, wobei auf der weiteren Feststoffelektrolyt-Separatorschicht eine weitere Kathodenschicht laminiert ist, wobei der Schichtverbund bevorzugt einmal in einer Richtung senkrecht auf eine Fläche, die von einer lateralen Ausdehnung des Schichtverbunds aufgespannt wird, geschnitten wird und dergestalt als Zellwickel aufgewickelt wird dass die zweite elektrisch leitfähige Ableiterschicht die weitere Kathodenschicht des Schichtverbunds elektrisch kontaktiert, wobei die erste elektrisch leitfähige Ableiterschicht besonders bevorzugt in einem ersten Bereich eine größere laterale Ausdehnung als die Anodenschicht aufweist und die zweite elektrisch leitfähige Ableiterschicht in einem zweiten Bereich, der dem ersten Bereich in einer Richtung entlang einer lateralen Ausdehnung der elektrisch leitfähigen Ableiterschicht gegenüberliegt, eine größere laterale Ausdehnung als die Kathodenschicht aufweist; und/oder
ii) auf einer Seite der zweiten elektrisch leitfähigen Ableiterschicht, die der Kathodenschicht gegenüberliegt, eine weitere Kathodenschicht laminiert wird, auf der eine weitere Feststoffelektrolyt-Separatorschicht laminiert ist, wobei auf der weiteren Feststoffelektrolyt-Separatorschicht eine weitere Anodenschicht laminiert ist, wobei der Schichtverbund bevorzugt einmal in einer Richtung senkrecht auf eine Fläche, die von einer lateralen Ausdehnung des Schichtverbunds aufgespannt wird, geschnitten wird und dergestalt als Zellwickel aufgewickelt wird, dass die erste elektrisch leitfähige Ableiterschicht die weitere Anodenschicht des Schichtverbunds elektrisch kontaktiert, wobei die erste elektrisch leitfähige Ableiterschicht besonders bevorzugt in einem ersten Bereich eine größere laterale Ausdehnung als die Anodenschicht aufweist und die zweite elektrisch leitfähige Ableiterschicht in einem zweiten Bereich, der dem ersten Bereich in einer Richtung entlang einer lateralen Ausdehnung der elektrisch leitfähige Ableiterschicht gegenüberliegt, eine größere laterale Ausdehnung als die Kathodenschicht aufweist;
wobei die erste elektrisch leitfähige Ableiterschicht und/oder zweite elektrisch leitfähige Ableiterschicht optional eine Schichtdicke im Bereich von ≤ 15 µm, bevorzugt ≤ 10 µm, aufweist.

12. Verfahren gemäß einem der Ansprüche 1 bis 7, **dadurch gekennzeichnet, dass** nach dem Verpressen des Schichtverbunds der Schichtverbund in einer Richtung senkrecht auf eine Fläche, die von einer lateralen Ausdehnung der Kathodenschicht, der Anodenschicht und der Feststoffelektrolyt-Separatorschicht aufgespannt wird,
i) in eine Vielzahl von Schichtverbänden geschnitten wird und die Vielzahl der Schichtverbände in einer gleichen Orientierung gestapelt werden, wobei zwischen den Schichtverbänden eine elektrisch leitfähige Ableiterschicht angeordnet wird, wobei die elektrisch leitfähige Ableiterschicht auf einer Seite eine elektrische Isolationsschicht aufweist und die elektrische Isolationsschicht auf einer Seite, die der elektrisch leitfähigen Ableiterschicht gegenüberliegt, eine weitere elektrisch leitfähige Ableiterschicht aufweist; oder
ii) in eine Vielzahl von Schichtverbänden geschnitten wird und die Vielzahl der Schichtverbände in einer wechselseitigen Orientierung gestapelt werden, wobei zwischen den Schichtverbänden ein elektrisch leitfähiger Ableiter angeordnet wird; oder
iii) einmal geschnitten wird und der Schichtverbund durch Falten, bevorzugt Z-Falten, gestapelt wird, wobei, zwischen aufeinander gefalteten Abschnitten des Schichtverbunds jeweils ein elektrisch leitfähiger Ableiter angeordnet wird.

13. Halbzeug einer Festkörperbatterie, hergestellt über ein Verfahren gemäß einem der Ansprüche 1 bis 7.

14. Festkörperbatterie, hergestellt über ein Verfahren gemäß einem der Ansprüche 8 bis 12, wobei die Festkörperbatterie bevorzugt eine über ein Verfahren gemäß einem der Ansprüche 8 bis 11 hergestellte gewickelte Festkörperbatterie ist oder eine über ein Verfahren gemäß Anspruch 12 hergestellte gestapelte oder gefaltete Festkörperbatterie ist.

15. Verwendung der Festkörperbatterie gemäß Anspruch 14 zur Energieversorgung einer
i) mobilen Vorrichtung, bevorzugt eines Automobils; und/oder
ii) stationären Vorrichtung, bevorzugt eines Gebäudes.
